# EUROPÄISCHE PATENTSCHRIFT

(11) **EP 3 756 172 B1**
(45) Veröffentlichungstag und Bekanntmachung des Hinweises auf die Patenterteilung: **13.12.2023**
(21) Anmeldenummer: 19716799.2
(22) Anmeldetag: 25.03.2019
(51) Int. Cl.: G07C 5/00, H04L 67/1097, H04L 67/12, B61L 3/00, B61L 27/57

(54) **VORRICHTUNG ZUR VERVIELFÄLTIGUNG UND SICHERUNG VON DATEN EINES FAHRTENREGISTRIERSYSTEMS IM SCHIENENVERKEHR**
APPARATUS FOR COPYING AND SECURING DATA FROM A JOURNEY RECORDING SYSTEM IN RAIL TRANSPORT
DISPOSITIF POUR LA MULTIPLICATION ET LA SÉCURISATION DE DONNÉES D'UN SYSTÈME D'ENREGISTREMENT DE DÉPLACEMENTS DANS LE TRAFIC FERROVIAIRE

(30) Priorität: 18.04.2018 DE 102018205917
(43) Veröffentlichungstag der Anmeldung: 30.12.2020
(73) Patentinhaber: Siemens Mobility GmbH, 81739 München (DE)
(72) Erfinder: BRABAND, Jens, 38106 Braunschweig (DE)
(74) Vertreter: Siemens Patent Attorneys
(86) Internationale Anmeldenummer: PCT/EP2019/057356
(87) Internationale Veröffentlichungsnummer: WO 2019/201556

(56) Entgegenhaltungen:
- DE-A1- 19 827 271
- DE-A1-102007 051 576
- US-A1- 2017 327 138
- US-B2- 8 813 204

## Beschreibung

### TECHNISCHES GEBIET

Gemäß einer Ausführungsform wird eine Distributionsvorrichtung zur Vervielfältigung von Daten eines Fahrtenregistriersystems im Schienenverkehr offenbart. Gemäß einer weiteren Ausführungsform wird eine Empfangsvorrichtung zur Sicherung von Daten eines Fahrtenregistriersystems im Schienenverkehr offenbart. Gemäß weiterer Ausführungsformen werden Verfahren zum Vervielfältigen und Sichern von Daten eines Fahrtenregistriersystems im Schienenverkehr offenbart.

### HINTERGRUND

Die begleitende Aufzeichnung von Fahrten moderner Verkehrsmittel, die für die Fortbewegung mit höheren Geschwindigkeiten ausgelegt sind, ist von enormer Bedeutung. So führen beispielsweise Schäden an Zügen oder Flugzeugen aufgrund der Fortbewegung mit höherer Geschwindigkeit häufig zu dramatischen Unfällen, deren Aufklärung in vielen Fällen aufgrund einer hohen Aufprallgeschwindigkeit und einer damit einhergehenden Deformation des Vehikels deutlich erschwert oder praktisch unmöglich ist. Eine ursächliche Aufklärung eines derartigen Unglücks ist jedoch bedeutsam, da hierdurch auf das Vorliegen technischen und menschlichen Versagens sowie das Vorliegen von kriminellen Machenschaften rückgeschlossen werden kann. Auf Basis derartiger Rückschlüsse können gegebenenfalls Maßnahmen getroffen werden, auf deren Basis ein zukünftiges Zustandekommen eines vergleichbaren Unglücks vermieden werden kann.

Es werden daher zunehmend Blackboxes in Gefährten des Schienenverkehrs eingesetzt, welche dazu eingerichtet sind, Abläufe von Fahrten im Schienenverkehr aufzuzeichnen. Derartige Blackboxes sind üblicherweise als unabhängige, unvernetzte Komponenten in einem Schienenfahrzeug eingesetzt und können - im Falle eines Unfalls des Schienenfahrzeugs - nach der Bergung der Blackbox ausgelesen werden. Dabei sind aus dem Stand der Technik verschiedene Schutzhülsen bekannt, welche die Blackbox im Kollisionsfall des Schienenfahrzeugs derart schützen können, sodass die Blackbox zumeist in einer Weise aus einer Kollision hervorgeht, in welcher die Blackbox ausgelesen werden kann.

DE19827271 A1 offenbart eine online Erfassung und Auswertung von rad- und gleisbezogenen Daten während einer Zugfahrt zur Erhöhung der Zugsicherheit und Reduzierung von Gleisprüffahrten.

Nachteilig hieran ist jedoch, dass eine derartig ausgestaltete Blackbox nach der Bergung im Unfallsfall manipuliert werden kann. So können beispielsweise Hersteller von Bauteilen, Bedienstete eines Fahrzeugdienstleisters oder Kriminelle daran interessiert sein, eine nachträgliche Löschung von Aufzeichnungen oder eine Änderungen dieser Aufzeichnungen zu veranlassen, um die tatsächlichen Ursachen eines Unfalls im Schadensfall zu verschleiern. Derartige Handlungsweisen verhindern demzufolge die Aufklärung derartiger Schadensfälle, welche für die fortwährende Verbesserung in der Sicherheit im Schienenverkehr erforderlich ist

US8813204 B2 befasst sich mit verbesserter Sicherheit in einem verteilten Speichernetzwerk mittels einer mehrphasigen Authentifizierung von Zugriffen.

### KURZZUSAMMENFASSUNG DER ERFINDUNG

Demzufolge besteht ein Bedarf an Maßnahmen, welche die Manipulationssicherheit von Fahrtenregistriersystemen im Schienenverkehr verbessern.

Gemäß einiger Ausführungsformen liegt daher die Aufgabe zugrunde technische Mittel bereitzustellen, welche eine möglichst manipulationssichere und vollständige Wiedergabe einer Fahrt im Schienenverkehr ermöglichen.

Gemäß einiger weiterer Ausführungsformen liegt daher die Aufgabe zugrunde Verfahren zur möglichst manipulationssicheren und vollständigen Wiedergabe einer Fahrt im Schienenverkehr durchzuführen.

Diese Aufgaben werden gemäß entsprechender Ausführungsformen durch eine Vorrichtung zur Sicherung von Daten eines Fahrtenregistriersystems gemäß Anspruch 1 sowie durch ein Verfahren zum Sichern von Daten eines Fahrtenregistriersystems im Schienenverkehr gemäß Anspruch 9 gelöst.

Weitere diese Ausführungsformen betreffende Ausgestaltungen werden in den abhängigen Ansprüchen beansprucht.

Gemäß einer Ausführungsform wird eine Distributionsvorrichtung zur Vervielfältigung von Daten eines Fahrtenregistriersystems im Schienenverkehr offenbart. Dabei weist die Distributionsvorrichtung eine Ausleseeinrichtung auf, welche zum Auslesen von durch das Fahrtenregistriersystem aufgezeichneten Datenpaketen eingerichtet ist. Dabei weist die Distributionsvorrichtung ferner eine Signaturerstellungseinrichtung auf, welche zum Erstellen einer für jedes aufgezeichnete Datenpaket kennzeichnenden Signatur eingerichtet ist. Ferner weist die Distributionsvorrichtung eine Ausgabeeinrichtung auf, welche zum Ausgeben der aufgezeichneten Datenpakete und der erstellten Signaturen an mehrere Netzwerkknoten der verteilten Datenbank eingerichtet ist. Gemäß einer weiteren Ausführungsform wird ein Verfahren zum Vervielfältigen von Daten eines Fahrtenregistriersystems im Schienenverkehr unter Verwendung einer verteilten Datenbank offenbart. Dabei weist das Verfahren die Schritte a) Auslesen von durch das Fahrtenregistriersystem aufgezeichnete Datenpakete, b) Erstellen einer für jedes Datenpaket kennzeichnenden Signatur, und c) Ausgeben der aufgezeichneten Datenpakete und der erstellten Signaturen an mehrere Netzwerkknoten der verteilten Datenbank auf. Basierend auf einem derartigen Ansatz wird es ermöglicht, Daten, welche einem Fahrtenregistriersystem entstammen und eine Fahrt im Schienenverkehr wiedergeben, an verschiedenen, räumlich getrennten Orten bereitzustellen. Im Falle eines Verlustes einer Manipulation oder einer Änderung der Daten an einem Netzwerkknoten der verteilten Datenbank verbleiben Kopien dieser Daten an weiteren, hiervon räumlich separierten Orten. Da davon auszugehen ist, dass ein potentieller Manipulator nicht Zugang zu allen diesen Netzwerkknoten der verteilten Datenbank erlangt, verbleiben demzufolge detailgetreue Nachweise des Fahrtenregistriersystems, welche eine Fahrt im Schienenverkehr betreffen. Darüber hinausgehend wird durch diesen Ansatz ein einzigartiger Fingerabdruck jedes Datenpakets, eine sogenannte Signatur, an den mehreren Netzwerkknoten der verteilten Datenbank bereitgestellt. Diese Signatur hat gegenüber dem betreffenden vollständigen Datenpaket den Vorteil eines geringeren Datenvolumens und kann zumindest die Existenz eines derartigen Datenpakets indizieren. Ein Netzwerkknoten, welcher das Datenpaket und die zugehörige Signatur erlangt, kann daher wahlweise das Datenpaket und/oder die Signatur verarbeiten bzw. sichern. Demzufolge wird hiernach eine verbesserte Flexibilität in der Vervielfältigung der Daten des Fahrtenregistriersystems ermöglicht.

Gemäß einer weiteren Ausführungsform wird eine Empfangsvorrichtung zur Sicherung von Daten eines Fahrtenregistriersystems im Schienenverkehr offenbart. Dabei ist die Empfangsvorrichtung eingerichtet, um einen ersten Netzwerkknoten einer verteilten Datenbank zu implementieren. Die Empfangsvorrichtung weist dabei eine Aufnahmeeinrichtung auf, welche zum Aufnehmen eines aufgezeichneten Datenpakets und einer Signatur des aufgezeichneten Datenpakets eingerichtet ist. Die Empfangsvorrichtung weist ferner eine Überwachungseinrichtung auf, welche zum Überwachen einer Hinterlegung des aufgezeichneten Datenpakets in der verteilten Datenbank eingerichtet ist. Die Empfangsvorrichtung weist ferner eine Zwischenspeichereinrichtung auf, welche zum Zwischenspeichern der erstellten Signaturen in Abhängigkeit vom Überwachen der Hinterlegung des aufgezeichneten Datenpakets in der verteilten Datenbank eingerichtet ist. Gemäß einer weiteren Ausführungsform wird ein Verfahren zum Sichern von Daten eines Fahrtenregistriersystems im Schienenverkehr unter Verwendung einer verteilten Datenbank offenbart. Dabei weist das Verfahren die Schritte a) Empfangen eines aufgezeichneten Datenpakets und einer Signatur des aufgezeichneten Datenpakets, b) Überwachen einer Hinterlegung des aufgezeichneten Datenpakets in der verteilten Datenbank, und c) Zwischenspeichern der erstellten Signaturen in Abhängigkeit vom Überwachen der Hinterlegung des aufgezeichneten Datenpakets zu der verteilten Datenbank auf.

Basierend auf einem derartigen Ansatz wird es ermöglicht, die erstellten Signaturen abhängig von dem Hinterlegen des aufgezeichneten Datenpakets in der verteilten Datenbank zwischenzeitlich in der Zwischenspeichereinrichtung zwischen zu speichern. Es wird daher - unabhängig von dem Zeitaufwand bzw. Verarbeitungsaufwand, welcher für das Hinterlegen des aufgezeichneten Datenpakets in der verteilten Datenbank erforderlich ist - eine Möglichkeit geschaffen, Daten, welche eine Fahrt im Schienenverkehr betreffen, unmittelbar nach der Aufnahme durch die Empfangsvorrichtung in der Zwischenspeichereinrichtung zu sichern. Im Falle, dass Daten eines Fahrtenregistriersystems, welche bereits an die Empfangsvorrichtung übertragen worden sind, aber noch nicht in der verteilten Datenbank hinterlegt worden sind, manipuliert werden, kann durch Vergleich der durch die Zwischenspeichereinrichtung der Empfangsvorrichtung gesicherten Signatur somit eine Nachweismöglichkeit einer etwaigen Manipulation des Fahrtenregistriersystems bereitgestellt werden. Demzufolge wird hierdurch eine verbesserte Manipulationssicherheit eines möglichst vollständigen Satzes an Daten des Fahrtenregistriersystems bereitgestellt.

Unter einem Fahrtenregistriersystem im Sinne der Erfindung ist ein Medium zu verstehen, welches zur Aufnahme und/oder Wiedergabe von Daten eingerichtet ist, welche sich auf eine Fahrt bezieht. Die Fahrt kann eine Fahrt im Schienenverkehr betreffen. Die Fahrt kann mit einer Bahn durchgeführt werden, beispielsweise mit einer Fernstreckenbahn, einer Stadtbahn oder einer Untergrundbahn. Die durch das Medium aufnehmbaren Daten können für physikalische Parameter, mit welchen die Fahrt durchgeführt wird, charakteristisch sein. Derartige physikalische Parameter können beispielsweise Geschwindigkeit, Aufenthaltsposition, Beschleunigung, Bremsverhalten, Temperatur und Druck umfassen. Das Fahrtenregistriersystem kann eine Blackbox, ein Data Logger oder ein Juridical Recorder sein.

Unter einer Signatur im Sinne der Erfindung ist eine kleine Datenmenge zu verstehen, welche für eine größere Datenmenge charakteristisch ist. Dabei kann die größere Datenmenge ein Datenpaket sein. Es kann ferner vorgesehen sein das die Signatur einer jeden Datenmenge unterschiedlich ist. Die Signatur kann einen einzigartigen Fingerabdruck des Datenpakets ausbilden. Die Signatur kann eine Verschlüsselung aufweisen. Es kann ferner vorgesehen sein, dass die Signatur mit kryptographischen Mitteln erstellt wird. Die Signatur kann einen kryptographischen Hash-Wert aufweisen.

Unter einem Datenpaket im Sinne der Erfindung ist eine geschlossene Dateneinheit zu verstehen, welche als Ganzes von einem Sender an einen Empfänger übertragen werden kann. Dabei kann der Sender ein Fahrtenregistriersystem sein und/oder der Empfänger kann eine Distributionsvorrichtung sein. Das Datenpaket kann für das Verhalten eines Gefährts, beispielsweise einer Bahn, im Schienenverkehr während eines bestimmten Zeitintervalls charakteristisch sein. Das Datenpaket kann z.B. Kopfdaten aufweisen, die einen Zeitstempel, eine Seriennummer, etc. beinhalten.

Unter einer verteilten Datenbank im Sinne der Erfindung ist ein Sicherung und/oder Verwaltung von Daten an verschiedenen Lokalitäten zu verstehen. Die Daten der verteilten Datenbank können auf verschiedenen rechnerbasierten Systemen gesichert werden. Die Daten der verteilten Datenbank können auf den verschiedenen rechnerbasierten Systemen in vervielfältigter Form gesichert sein. Die unterschiedlichen Lokalitäten können in unterschiedlichen Sicherheitszonen angeordnet sein, sodass eine gleichzeitige Manipulation verhindert wird. Die verteilte Datenbank kann eine Blockchain basierte Datenbank sein.

Gemäß einer Ausführungsform der Distributionsvorrichtung entsprechen die Daten der aufgezeichneten Datenpakete Ereignissen innerhalb eines festgelegten Zeitintervalls.

Auf diese Weise kann eine besonders einfache und benutzerfreundliche Korrelation zwischen den Daten des jeweiligen Datenpakets und Ereignissen während einer Fahrt im Schienenverkehr bereitgestellt werden. Rückschlüsse betreffend einer Fahrt im Schienenverkehr können somit besonders einfach mittelt werden. Eine getaktete Analyse wird möglich. Das Zeitintervall kann gemäß einem solchen Auswertetakt vorgegeben sein.

Gemäß einer Ausführungsform der Distributionsvorrichtung ist die Länge des festgelegten Zeitintervalls von mindestens zwei der aufgezeichneten Datenpakete identisch. Gemäß einer Ausführungsform der Distributionsvorrichtung ist das Datenvolumen von mindestens zwei der aufgezeichneten Datenpakete identisch.

Auf diese Weise kann ein besonders effizienter Workflow bei der Verarbeitung der Datenpakete und der betreffenden Signaturen bereitgestellt werden. Eine Vervielfältigung der Datenpakete und der betreffenden Signaturen, welche den mehreren Netzwerkknoten der verteilten Datenbank bereitgestellt werden, ist demzufolge auf eine besonders effiziente Weise möglich.

Damit die Datenpakete Ereignisse innerhalb festgelegter Zeitintervalle bzw. festgelegte Längen aufweisen, kann ein Sammeln von Ereignissen des Fahrtenregistriersystems und Kapseln in gemeinsame Datenpakte vorgesehen sein.

Gemäß einer Ausführungsform der Distributionsvorrichtung ist die Signatur der aufgezeichneten Datenpakete kryptographisch erstellbar.

Auf diese Weise weist die Signatur eine verbesserte Verschlüsselung auf, wodurch eine Datenmanipulation weiter erschwert wird.

Gemäß einer Ausführungsform der Distributionsvorrichtung ist diese zu Vervielfältigung von Daten eines "tamper-proof" konstruierten Fahrkartenregistriersystems im Schienenverkehr eingerichtet, sodass bei Auslesen der Datenpakete des Fahrtenregistriersystems ein geheimer Schlüssel gelöscht werden kann.

Auf diese Weise verbleibt die Möglichkeit, Daten des Fahrtenregistriersystems zu löschen, die Daten können jedoch nicht modifiziert beziehungsweise gefälscht werden. Es wird auf diese Weise auch ausgeschlossen oder zumindest erheblich erschwert, dass aufgezeichnete Datenpakete, für welche noch keine zugehörige Signatur erstellt worden ist und/oder welche noch nicht durch die Aufnahmeeinrichtung der Empfangsvorrichtung aufgenommen worden sind, manipuliert werden können.

Gemäß einer Ausführungsform der Empfangsvorrichtung ist die Zwischenspeichereinrichtung dazu eingerichtet, das Zwischenspeichern der erstellten Signatur zu beenden, wenn das aufgenommene Datenpaket in der verteilten Datenbank hinterlegt ist, also in diese aufgenommen wurde. Nach Beendigung des Zwischenspeicherns kann das Datenpakt gelöscht werden oder als verworfen markiert werden.

Auf diese Weise können in dem Zwischenspeicher zwischen gespeicherte Signaturen, deren zugehöriges Datenpaket bereits der verteilten Datenbank hinterlegt worden sind, wiederum aus dem Zwischenspeicher gelöscht werden, da sie hierin nicht mehr benötigt werden. Demzufolge wird hierdurch die Speicherbelegung der Zwischenspeichereinrichtung auf das zum Erzielen einer Verbesserung der Manipulationssicherheit erforderliche Maß begrenzt. Es wird demzufolge hierdurch eine optimierte Speicherbelegung realisiert, wodurch die Effizienz der Datenverarbeitung der Empfangsvorrichtung verbessert werden kann.

Gemäß einer Ausführungsform der Empfangsvorrichtung ist die Zwischenspeichereinrichtung ferner zum Zwischenspeichern einer Absenderinformation der erstellten Signatur eingerichtet.

Auf diese Weise kann eine verbesserte und/oder benutzerfreundlichere Zuordnung der Signatur zu dem jeweiligen Datenpaket des betreffenden Fahrtenregistriersystems erzielt werden.

Gemäß einer Ausführungsform der Empfangsvorrichtung basiert das Hinterlegen des aufgezeichneten Datenpakets in die verteilte Datenbank auf einem Proof-of-Work Algorithmus. Gemäß einer Ausführungsform kann hierbei auf das Erheben von Gebühren verzichtet werden.

Auf diese Weise wird ein effizient arbeitender und manipulationssicherer Mechanismus zum Hinterlegen von aufgezeichneten Datenpaketen in der verteilten Datenbank bereitgestellt.

Gemäß einer Ausführungsform der Empfangsvorrichtung ist die Überwachungseinrichtung ferner zum Überwachen der Aufnahme weiterer aufgezeichneter Datenpakete in die verteilte Datenbank eingerichtet, und die Zwischenspeichereinrichtung ist dazu eingerichtet, das Zwischenspeichern der erstellten Signatur zu beenden, wenn ein mit der erstellten Signatur assoziiertes weiteres aufgezeichnetes Datenpaket in der verteilte Datenbank hinterlegt ist.

Auf diese Weise kann das Zwischenspeichern der erstellten Signaturen in der Zwischenspeicherung auch dann beendet werden, wenn das betreffende aufgezeichnete Datenpaket durch einen anderen Netzwerkknoten der verteilten Datenbank in der verteilten Datenbank hinterlegt worden ist. Es wird hierdurch somit eine zusätzliche Optimierung in der Speicherbelegung realisiert, wodurch die Effizienz der Datenverarbeitung der Empfangsvorrichtung weiter verbessert werden kann.

Gemäß einer Ausführungsform der Empfangsvorrichtung weist diese ferner eine Prüfeinrichtung auf, welche dazu eingerichtet ist zu prüfen, ob die Zwischenspeichereinrichtung mindestens ein Element aufweist.

Ein Fehlen jeglicher zwischengespeicherter Daten kann Probleme in der Datenkommunikation und/oder Speicherung indizieren. Auf Basis einer derartigen Prüfeinrichtung kann demzufolge ein Warnsignal zur Überprüfung und/oder Wartung der Empfangsvorrichtung beziehungsweise der verteilten Datenbank bereitgestellt werden. Demzufolge kann durch die Prüfeinrichtung eine Verbesserung in der Zuverlässigkeit der Datensicherung betreffend das Fahrtenregistriersystem im Schienenverkehr erzielt werden.

Gemäß einer Ausführungsform der Empfangsvorrichtung ist die Aufnahmeeinrichtung zum Validieren der aufgenommenen aufgezeichneten Datenpakete eingerichtet.

Gemäß einer Ausführungsform der Distributionsvorrichtung oder der Empfangsvorrichtung ist die verteilte Datenbank mit oder ohne einer verteilten Autorität ausgebildet.

Durch die Implementierung der verteilten Autorität kann ein verbesserter Sicherheitsstandart der verteilten Datenbank erzielt werden, welcher verhindert, dass unerwünschte Daten in die verteilte Datenbank eingespielt werden oder die verteilte Datenbank überlastet wird. Somit kann hierdurch die Zuverlässigkeit der verteilten Datenbank verbessert werden. Durch das Verzichten auf die verteilte Autorität kann die Ausgestaltung der verteilten Datenbank sowie der Zugang eines Benutzers auf die verteilte Datenbank vereinfacht werden. Hieraus können sich verbesserte Effizienzen in der Datenkommunikation ergeben. Die zentrale Autorität kann der Zertifizierung der Identifikation einzelner Teilnehmer dienen.

Gemäß einer Ausführungsform der Distributionsvorrichtung oder der Empfangsvorrichtung ist die verteilte Datenbank eine Blockchain basierte Datenbank, welche vorzugsweise eine öffentliche Blockchain umfasst.

Durch die Verwendung einer Blockchain basierten Datenbank weist die verteilte Datenbank eine weiter verbesserte Manipulationssicherheit auf, da in die Blockchain aufgenommene Datenpakete hierin unwiderruflich implementiert sind. Aufgrund der kryptographischen Hash-Verschlüsselung der Blockchain ist es einem potentiellen Manipulator nicht möglich, Datenpakete, welche in die Blockchain aufgenommen worden sind, hieraus zu eliminieren.

Gemäß einer Ausführungsform des Verfahrens zum Vervielfältigen von Daten wird dies mit einer Distributionsvorrichtung gemäß einer der zuvor dargestellten Ausführungsformen durchgeführt. Gemäß einer Ausführungsform des Verfahrens zum Sichern von Daten wird dies mit einer Empfangsvorrichtung gemäß einer der zuvor dargestellten Ausführungsformen durchgeführt.

Auf diese Weise kann das Vervielfältigen und/oder Sichern der Daten des Fahrtenregistriersystems mit einer für spezifische Applikationen besonders geeigneten Vorrichtung durchgeführt werden, wodurch sich eine verbesserte Verfahrenseffizienz ergibt.

Gemäß weiterer Ausführungsformen kann ferner eine Identifikation eines Teilnehmers der verteilten Datenbank durch eine Public Key Infrastruktur vorgesehen sein.

Die im Vorstehenden beschriebenen, die jeweilige Ausführungsform betreffenden Aspekte und die dazugehörigen, zur Weiterbildung der Distributionsvorrichtung sowie der Empfangsvorrichtung gelten auch für die Ausführungsformen und die dazugehörigen Weiterbildungen des zugehörigen Verfahrens und umgekehrt.

Unter eines Proof-of-Work Algorithmus im Sinne der Erfindung ist ein Mechanismus zur Bereitstellung von Daten in einer verteilten Datenbank zu verstehen, welcher mit einer Aufwendung von mindestens einem Netzwerkknoten dieser verteilten Datenbank einhergeht. Der Proof-of-Work Algorithmus kann das Lösen eines kryptographischen Rätsels durch den mindestens einen Netzwerkknoten inkludierten. Das Lösen des kryptographischen Rätsels kann dabei das Ermitteln eines kryptographischen Hash-Werts inkludierten. Es kann vorgesehen sein, dass das Lösen des kryptographischen Rätsels zwischen verschiedenen Netzwerkknoten kompetitiv erfolgt. Bei der Durchführung des Power-of-Work Algorithmus zum Hinterlegen von Datenpaketen in der verteilte Datenbank (manchmal auch als Hinzufügen von Datenpakten zur verteilten Datenbank bezeichnet) kann ferner auf das Erheben von Gebühren verzichtet werden.

Obige sowie weitere Vorteile, Merkmale und Anwendungsmöglichkeiten einer Ausführungsform ergeben sich aus der nachfolgenden Beschreibung von bevorzugten Ausführungsbeispielen anhand von wenigsten teilweise schematischen Figuren.

### KURZE BESCHREIBUNG DER FIGUREN

In Figur 1 ist eine Distributionsvorrichtung zur Vervielfältigung von Daten eines Fahrtenregistriersystems im Schienenverkehr gemäß einer Ausführungsform schematisch dargestellt.
In Figur 2 ist eine Empfangsvorrichtung zur Sicherung von Daten eines Fahrtenregistriersystems im Schienenverkehr gemäß einer Ausführungsform schematisch dargestellt.
In Figur 3 ist ein Flussdiagramm betreffend ein Verfahren zum Vervielfältigen von Daten eines Fahrtenregistriersystems im Schienenverkehr unter Verwendung einer verteilten Datenbank und einer Distributionsvorrichtung gemäß einer Ausführungsform dargestellt.
In Figur 4 ist ein Flussdiagramm betreffend ein Verfahren zum Sichern von Daten eines Fahrtenregistriersystems im Schienenverkehr unter Verwendung einer verteilten Datenbank und einer Empfangsvorrichtung gemäß einer Ausführungsform dargestellt.

### DETAILLIERTE BESCHREIBUNG VON AUSFÜHRUNGSFORMEN

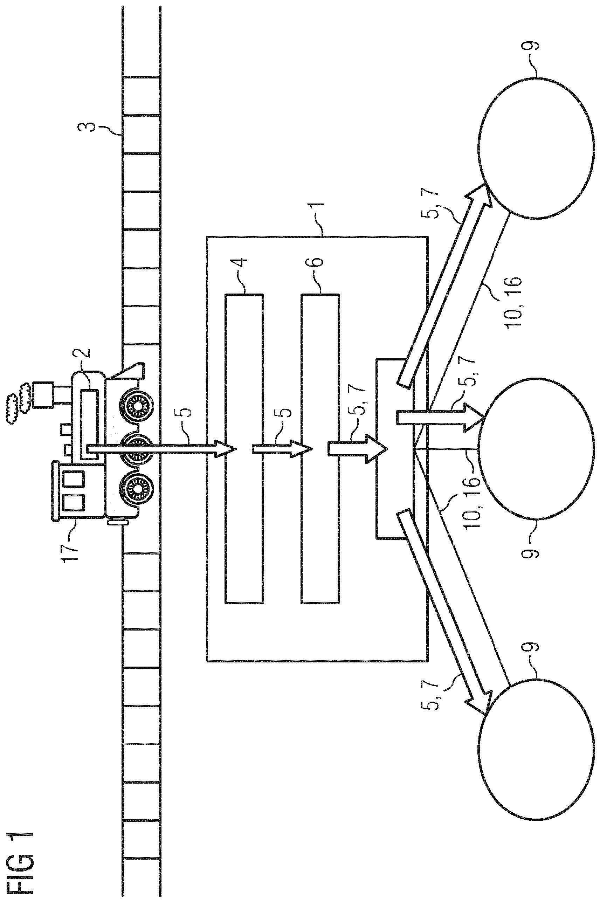

In Figur 1 ist eine Distributionsvorrichtung 1 zur Vervielfältigung von Daten eines Fahrtenregistriersystems 2 im Schienenverkehr 3 gemäß einer Ausführungsform schematisch dargestellt. Dabei kann vorgesehen sein, dass das Fahrtenregistriersystem in einem Vehikel 17 aufgenommen ist. Aus Gründen der verbesserten Veranschaulichung wurde die Distributionsvorrichtung 1 in Figur 1 außerhalb des Vehikels 17 dargestellt. Es kann jedoch auch vorgesehen sein, dass die Distributionsvorrichtung 1 innerhalb des Vehikels 17 angeordnet ist. Auch kann vorgesehen sein, dass sie Distributionsvorrichtung 1 in unmittelbar räumlicher Nähe zu dem Fahrtenregistriersystem 2 angeordnet ist. Auch kann vorgesehen sein, dass das Fahrtenregistriersystem 2 in der Distributionsvorrichtung 1 aufgenommen ist. Auch kann vorgesehen sein, dass das Fahrtenregistriersystem 2 und die Distributionsvorrichtung 1 innerhalb einer gemeinsamen Rechenvorrichtung angeordnet sind.

Die Distributionsvorrichtung 1 gemäß Figur 1 kann eine Ausleseeinrichtung 4 aufweisen, welche zum Auslesen von durch das Fahrtenregistriersystem 2 aufgezeichneten Datenpaketen 5 eingerichtet ist. Dabei kann vorgesehen sein, dass die Daten der aufgezeichneten Datenpakete 5 Ereignissen innerhalb eines festgelegten Zeitintervalls entsprechen. Derartige Ereignisse können sich beispielsweise auf Fahrten des Vehikels 17 im Schienenverkehr 3 beziehen. Es kann ferner vorgesehen sein, dass die Länge des festgelegten Zeitintervalls von mindestens 2 der aufgezeichneten Datenpakete 5 identisch ist. Alternativ oder zusätzlich kann vorgesehen sein, dass das Datenvolumen von mindestens 2 der aufgezeichneten Datenpakete 5 identisch ist.

Die Distributionsvorrichtung 1 kann ferner eine Signaturerstellungseinrichtung 6 aufweisen, welche zum Erstellen einer für jedes aufgezeichnete Datenpaket 5 kennzeichnende Signatur 7 eingerichtet ist. Dabei kann vorgesehen sein, dass die Signatur 7 der aufgezeichneten Datenpakete kryptographisch erstellbar ist.

Die Distributionsvorrichtung 1 gemäß Figur 1 kann ferner eine Ausgabeeinrichtung 8 aufweisen, welche zum Ausgeben der aufgezeichneten Datenpakete 5 und der erstellten Signaturen 7 an mehrere Netzwerkknoten 9 der verteilten Datenbank 10 eingerichtet ist. Dabei kann vorgesehen sein, dass die verteilte Datenbank 10 eine Blockchain basierte Datenbank 16 ist, welche vorzugsweise eine öffentliche Blockchain umfasst. Auch kann vorgesehen sein, dass die verteilte Datenbank 10 mit oder ohne einer verteilten Autorität ausgebildet ist.

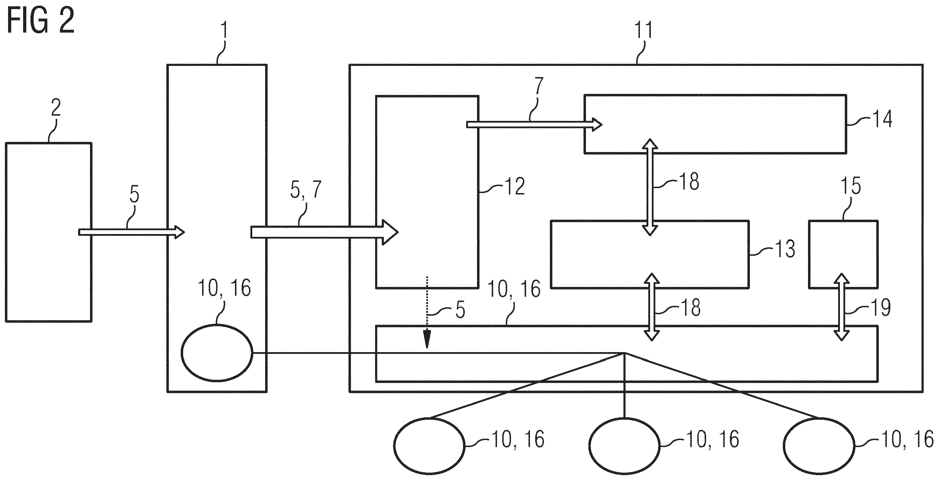

In Figur 2 ist eine Empfangsvorrichtung 11 zur Sicherung von Daten eines Fahrtenregistriersystems 2 im Schienenverkehr gemäß einer Ausführungsform schematisch dargestellt. Dabei kann die Empfangsvorrichtung 11 dazu eingerichtet sein, um einen ersten Netzwerkknoten 9 einer verteilten Datenbank 10 zu implementieren. Wie in Figur 2 dargestellt, kann die Empfangsvorrichtung 11 dazu eingerichtet sein, Daten von einem Fahrtenregistriersystem 2 im Schienenverkehr 3 über die Distributionsvorrichtung 1 zu erlangen. Dabei kann die Distributionsvorrichtung 1 gemäß einer der hierin beschriebenen Ausführungsformen ausgebildet sein.

Wie in Figur 2 dargestellt, kann die Empfangsvorrichtung 11 eine Aufnahmeeinrichtung 12 aufweisen, welche zum Aufnehmen eines aufgezeichneten Datenpakets 5 und einer Signatur 7 des aufgezeichneten Datenpakets 5 eingerichtet ist. Dabei können das aufgezeichnete Datenpaket 5 und die Signatur 7 des aufgezeichneten Datenpakets 5 von einer Distributionsvorrichtung 1 gemäß der hierin beschriebenen Ausführungsformen übermittelt werden.

Die Aufnahmeeinrichtung 12 der Empfangsvorrichtung 11 kann ferner dazu eingerichtet sein, die aufgezeichneten Datenpakete 5 in der verteilten Datenbank 10 zu hinterlegen bzw. zur verteilten Datenbank 10 hinzuzufügen. Hierfür kann ein gewisser Verarbeitungsaufwand erforderlich sein, welcher mit einem signifikanten Zeitaufwand für das Hinterlegen des aufgezeichneten Datenpakets 5 in der verteilten Datenbank 10 einhergeht. Dabei kann vorgesehen sein, dass das Hinterlegen des aufgezeichneten Datenpakets 5 in der verteilten Datenbank 10 auf einem Power-of-Work Algorithmus basiert. Auch kann vorgesehen sein, dass die verteilte Datenbank 10 mit oder ohne einer verteilten Autorität ausgebildet ist. Auch kann vorgesehen sein, dass die verteilte Datenbank 10 eine Blockchain basierte Datenbank 16 ist, welche vorzugsweise eine öffentliche Blockchain umfasst.

Die Empfangsvorrichtung 11 kann ferner eine Überwachungseinrichtung 13 aufweisen, welche zum Überwachen des Hinterlegens des aufgezeichneten Datenpakets 5 in der verteilten Datenbank 10 eingerichtet ist. Ferner kann die Empfangsvorrichtung 11 eine Zwischenspeichereinrichtung 14 aufweisen, welche zum Zwischenspeichern der erstellten Signaturen 7 in Abhängigkeit des Überwachens des Hinterlegens des aufgezeichneten Datenpakets 5 zu der verteilten Datenbank 10 eingerichtet ist. Dabei kann die Zwischenspeichereinrichtung 14 dazu eingerichtet sein, dass Zwischenspeichern der erstellten Signatur 7 zu beenden, wenn das aufgenommene Datenpaket 5 in der verteilten Datenbank 10 hinterlegt ist. Zur Implementierung einer derartigen Überwachung des in die verteilten Datenbank hinterlegten aufgenommen Datenpakets 5 sowie einer entsprechenden Steuerung der Zwischenspeichereinrichtung 14 können erste Steuerungs- und Überwachungsmittel 18 in der Empfangsvorrichtung 11 vorgesehen sein. Ferner kann vorgesehen sein, dass die Zwischenspeichereinrichtung 14 zum Zwischenspeichern einer Absenderinformation der erstellten Signatur 7 eingerichtet ist.

Es kann ferner die Überwachungseinrichtung 13 der Empfangsvorrichtung 11 zum Überwachen des Hinterlegens weiterer aufgezeichneter Datenpakete in der verteilten Datenbank 10 eingerichtet sein. Ferner kann die Zwischenspeichereinrichtung 14 auch dazu eingerichtet sein, dass Zwischenspeichern der erstellten Signatur 7 zu beenden, wenn ein mit der erstellten Signatur 7 assoziiertes weiteres aufgezeichnetes Datenpaket 5 in die verteilte Datenbank 10 aufgenommen ist.

Die Empfangsvorrichtung 11 kann ferner eine Prüfeinrichtung 15 aufweisen, welche dazu eingerichtet ist zu prüfen, ob die Zwischenspeichereinrichtung 14 mindestens ein Element aufweist. Dabei kann es sich beispielsweise um eine in dem er Zwischenspeichereinrichtung 14 vorübergehend abgelegte erstellten Signatur 7 handeln. Zur Implementierung einer derartigen Überwachung der in der Zwischenspeichereinrichtung 14 aufgenommenen sowie zur Ausgabe eines Warnsignals, falls kein Element in der Zwischenspeichereinrichtung 14 aufgenommenen ist, können ferner zweite Steuerungs- und Überwachungsmittel 19 in der Empfangsvorrichtung 11 vorgesehen sein.

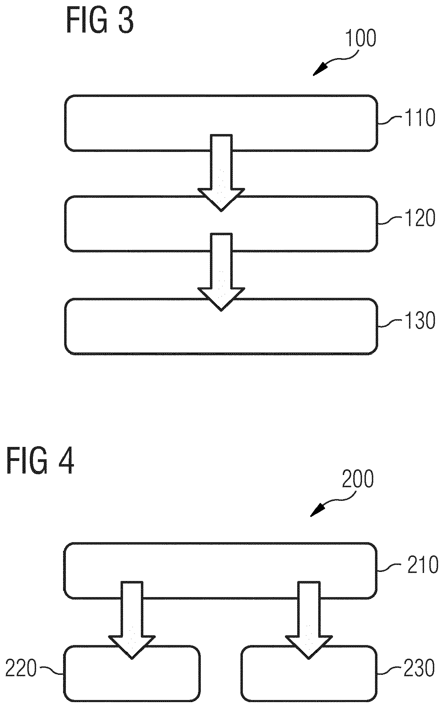

In Figur 3 ist ein Flussdiagramm betreffend ein Verfahren 100 zum Vervielfältigen von Daten eines Fahrtenregistriersystems 2 im Schienenverkehr 3 unter Verwendung einer verteilten Datenbank 10 dargestellt. 14. Dabei kann das Verfahren 100 den Schritt Auslesen 110 von durch das Fahrtenregistriersystem 2 aufgezeichnete Datenpakete aufweisen. Das Verfahren 100 kann ferner den Schritt Erstellen 120 einer für jedes Datenpaket 5 kennzeichnenden Signatur 7 aufweisen. Das Verfahren kann ferner den Schritt Ausgeben 130 der aufgezeichneten Datenpakete 5 und der erstellten Signaturen 7 an mehrere Netzwercknoten 9 der verteilten Datenbank 10 aufweisen. Das Verfahren 100 kann ferner mit einer Distributionsvorrichtung 1 gemäß einer der hierin dargestellten Ausführungsformen durchgeführt werden.

In Figur 4 ist ein Flussdiagramm betreffend ein Verfahren 200 zum Sichern von Daten eines Fahrtenregistriersystems 2 im Schienenverkehr 3 unter Verwendung einer verteilten Datenbank 10 dargestellt. Dabei kann das Verfahren 200 den Schritt Empfangen 210 eines aufgezeichneten Datenpakets 5 und einer Signatur 7 des aufgezeichneten Datenpakets 5 aufweisen. Das Verfahren 200 kann ferner den Schritt Überwachen 220 eines Hinterlegens des aufgezeichneten Datenpakets 5 in der verteilten Datenbank 10 aufweisen. Das Verfahren kann ferner den Schritt Zwischenspeichern 230 der erstellten Signaturen 7 in Abhängigkeit des Überwachens des Hinterlegens des aufgezeichneten Datenpakets 5 in der verteilten Datenbank 10 aufweisen. Das Verfahren kann ferner mit einer Empfangsvorrichtung 11 gemäß einer der hierin dargestellten Ausführungsformen durchgeführt wird.

## Patentansprüche

1. Vorrichtung umfassend eine Empfangsvorrichtung (11) zur Sicherung von Daten eines Fahrtenregistriersystems (2) im Schienenverkehr (3) und mehrere Netzwerkknoten (9) einer verteilten Datenbank (10),
wobei die Empfangsvorrichtung (11) eingerichtet ist, um einen ersten Netzwerkknoten (9) der verteilten Datenbank (10) zu implementieren, aufweisend:
eine Aufnahmeeinrichtung (12), eingerichtet zum Aufnehmen eines aufgezeichneten Datenpakets (5) und einer Signatur (7) des aufgezeichneten Datenpakets (5), wobei die Signatur einen einzigartigen Fingerabdruck des aufgezeichneten
Datenpakets ausbildet,
eine Überwachungseinrichtung (13), eingerichtet zum Überwachen eines Hinterlegens des aufgezeichneten Datenpakets (5) in der verteilten Datenbank (10), und
eine Zwischenspeichereinrichtung (14), eingerichtet zum Zwischenspeichern der Signatur (7) in Abhängigkeit des Überwachens des Hinterlegens des aufgezeichneten Datenpakets (5) in der verteilten Datenbank (10),
wobei die Zwischenspeichereinrichtung (14) dazu eingerichtet ist, das Zwischenspeichern der Signatur (7) zu beenden, wenn das aufgenommene Datenpaket (5) in der verteilten Datenbank (10) hinterlegt ist.

2. Vorrichtung nach Anspruch 1, wobei die Zwischenspeichereinrichtung (14) ferner zum Zwischenspeichern einer Absenderinformation der Signatur (7) eingerichtet ist.

3. Vorrichtung nach einem der Ansprüche 1 bis 2, wobei das Hinterlegen des aufgezeichneten Datenpakets (5) in der verteilten Datenbank (10) auf einem Proof-of-Work Algorithmus basiert.

4. Vorrichtung nach einem der Ansprüche 1 bis 3, wobei die Überwachungseinrichtung (13) ferner zum Überwachen des Hinterlegens weiterer aufgezeichneter Datenpakete (5) in der verteilten Datenbank (10) eingerichtet ist, und
wobei die Zwischenspeichereinrichtung (14) dazu eingerichtet ist, das Zwischenspeichern der Signatur (7) zu beenden, wenn ein mit der Signatur (7) assoziiertes weiteres aufgezeichnetes Datenpaket (5) in die verteilte Datenbank (10) hinterlegt ist.

5. Vorrichtung nach einem der Ansprüche 1 bis 4, die Empfangsvorrichtung J ferner aufweisend eine Prüfeinrichtung (15), welche dazu eingerichtet ist, zu prüfen, ob die Zwischenspeichereinrichtung (14) mindestens ein Element aufweist.

6. Vorrichtung nach einem der Ansprüche 1 bis 5, wobei die verteilte Datenbank (10) mit oder ohne einer verteilten Autorität ausgebildet ist.

7. Vorrichtung nach einem der Ansprüche 1 bis 6, wobei die verteilte Datenbank (10) eine Blockchain basierte Datenbank (16) ist, welche vorzugsweise eine öffentliche Blockchain umfasst.

8. Vorrichtung umfassend die Empfangsvorrichtung (11) nach einem der Ansprüche 1 bis 7 und ein Fahrtenregistriersystem (2) im Schienenverkehr, ferner aufweisend eine Distributionsvorrichtung (1) zur Vervielfältigung von Daten des Fahrtenregistriersystems (2) im Schienenverkehr (3), wobei die Distributionsvorrichtung (1) aufweist:
eine Ausleseeinrichtung (4), eingerichtet zum Auslesen von durch das Fahrtenregistriersystem (2) aufgezeichneten Datenpaketen (5),
eine Signaturerstellungseinrichtung (6), eingerichtet zum Erstellen einer für jedes aufgezeichnete Datenpaket (5) kennzeichnenden Signatur (7), und
eine Ausgabeeinrichtung (8), eingerichtet zum Ausgeben der aufgezeichneten Datenpakete (5) und der erstellten Signaturen (7) an mehrere Netzwerkknoten (9) der verteilten Datenbank (10) .

9. Verfahren (200) zum Sichern von Daten eines Fahrtenregistriersystems (2) im Schienenverkehr (3) unter Verwendung einer verteilten Datenbank (10), aufweisend die folgenden Schritte:
Empfangen (210) eines aufgezeichneten Datenpakets (5) und einer Signatur (7) des aufgezeichneten Datenpakets (5), wobei die Signatur einen einzigartigen Fingerabdruck des Datenpakets ausbildet,
Überwachen (220) eines Hinterlegens des aufgezeichneten Datenpakets (5) in der verteilten Datenbank (10), und
Zwischenspeichern (230) der Signatur (7) in Abhängigkeit vom Überwachen des Hinterlegens des aufgezeichneten Datenpakets (5) in der verteilten Datenbank (10), wobei das Zwischenspeichern der Signatur beenden wird, wenn das aufgenommene Datenpaket in der verteilten Datenbank hinterlegt ist.

10. Verfahren (200) nach Anspruch 9, welches mit einer Vorrichtung gemäß einem der Ansprüche 1-6 durchgeführt wird.

11. Verfahren (100) nach Anspruch 9 oder 10, aufweisend die folgenden Schritte:
Auslesen (110) von durch das Fahrtenregistriersystem (2) aufgezeichneten Datenpakete (5),
Erstellen (120) einer für jedes Datenpaket (5) kennzeichnenden Signatur (7), und
Ausgeben (130) der aufgezeichneten Datenpakete (5) und der erstellten Signaturen (7) an mehrere Netzwerkknoten (9) der verteilten Datenbank (10).

## Claims

1. Apparatus comprising a receiving apparatus (11) for securing data of a journey registration system (2) in rail transport (3) and a plurality of network nodes (9) of a distributed database (10), wherein the receiving apparatus (11) is configured to implement a first network node (9) of the distributed database (10), having:
an acquisition facility (12), configured for acquiring a recorded data packet (5) and a signature (7) of the recorded data packet (5), wherein the signature embodies a unique fingerprint of the recorded data packet,
a monitoring facility (13), configured for monitoring a storing of the recorded data packet (5) in the distributed database (10), and
a temporary storage facility (14), configured for temporarily storing the signature (7) as a function of the monitoring of the storing of the recorded data packet (5) in the distributed database (10),
wherein the temporary storage facility (14) is configured to terminate the temporary storage of the signature (7) when the acquired data packet (5) is stored in the distributed database (10) .

2. Apparatus according to claim 1,
wherein the temporary storage facility (14) is further configured for temporarily storing an item of sender information of the signature (7).

3. Apparatus according to one of claims 1 to 2, wherein the storing of the recorded data packet (5) in the distributed database (10) is based on a proof of work algorithm.

4. Apparatus according to one of claims 1 to 3, wherein the monitoring facility (13) is further configured for monitoring the storing of further recorded data packets (5) in the distributed database (10), and
wherein the temporary storage facility (14) is configured to terminate the temporary storage of the signature (7) when a further recorded data packet (5) associated with the signature (7) is stored in the distributed database (10).

5. Apparatus according to one of claims 1 to 4, the receiving apparatus further having a checking facility (15), which is configured to check whether the temporary storage facility (14) has at least one element.

6. Apparatus according to one of claims 1 to 5,
wherein the distributed database (10) is embodied with or without a distributed authority.

7. Apparatus according to one of claims 1 to 6, wherein the distributed database (10) is a blockchain-based database (16), which preferably comprises a public blockchain.

8. Apparatus comprising the receiving apparatus (11) according to one of claims 1 to 7 and a journey registration system (2) in rail transport, further having a distribution apparatus (1) for copying data of the journey registration system (2) in rail transport (3), wherein the distribution apparatus (1) has:
a readout facility (4), configured for reading out data packets (5) recorded by the journey registration system (2),
a signature creation facility (6), configured for creating a signature (7) that identifies each recorded data packet (5), and
an output facility (8), configured for outputting the recorded data packets (5) and the created signatures (7) to a plurality of network nodes (9) of the distributed database (10) .

9. Method (200) for securing data of a journey registration system (2) in rail transport (3) using a distributed database (10), having the following steps:
receiving (210) a recorded data packet (5) and a signature (7) of the recorded data packet (5), wherein the signature embodies a unique fingerprint of the data packet,
monitoring (220) a storing of the recorded data packet (5) in the distributed database (10), and
temporarily storing (230) the signature (7) as a function of the monitoring of the storing of the recorded data packet (5) in the distributed database (10), wherein the temporary storage of the signature is terminated when the recorded data packet is stored in the distributed database.

10. Method (200) according to claim 9, which is performed using an apparatus according to one of claims 1-6.

11. Method (100) according to claim 9 or 10, having the following steps:
reading out (110) data packets (5) recorded by the journey registration system (2),
creating (120) a signature (7) that identifies each data packet (5), and
outputting (130) the recorded data packets (5) and the created signatures (7) to a plurality of network nodes (9) of the distributed database (10).

## Revendications

1. Installation comprenant une installation (11) de réception pour la sécurisation de données d'un système (2) d'enregistrement d'itinéraires dans le trafic (3) ferroviaire et plusieurs noeuds (9) de réseau d'une base (10) de données répartie, dans lequel l'installation (11) de réception est agencée pour mettre en œuvre un premier noeud (9) de réseau de la base (10) de données répartie, comportant :
un dispositif (12) de réception agencé pour recevoir un paquet (5) de données enregistré et une signature (7) du paquet (5) de données enregistré, dans lequel la signature constitue une empreinte digitale unique en son genre du paquet de données enregistré,
un dispositif (13) de contrôle agencé pour contrôler une mise du paquet (5) de données enregistré dans la base (10) de données répartie, et
un dispositif (14) de mémoire tampon agencé pour mettre en mémoire tampon la signature (7) en fonction du contrôle de la mise du paquet (5) de données enregistré dans la base (10) de données répartie,
dans lequel le dispositif (14) de mémoire tampon est agencé pour mettre fin à la mise en mémoire tampon de la signature (7) lorsque le paquet (5) de données enregistré est mis dans la base (10) de données répartie.

2. Installation suivant la revendication 1,
dans laquelle le dispositif (14) de mémoire tampon est agencé en outre pour mettre en mémoire tampon une information d'envoi de la signature (7).

3. Installation suivant l'une des revendications 1 à 2, dans laquelle la mise du paquet (5) de données enregistré dans la base (10) de données répartie repose sur un algorithme Proof-of-Work.

4. Installation suivant l'une des revendications 1 à 3, dans laquelle le dispositif (13) de contrôle est agencé en outre pour le contrôle de la mise d'autres paquets (5) de données enregistrés dans la base (10) de données répartie et dans laquelle le dispositif (14) de mémoire tampon est agencé pour mettre fin à la mise en mémoire tampon de la signature (7) lorsqu'un autre paquet (5) de données enregistré, associé à la signature (7), est mis dans la base (10) de données répartie.

5. Installation suivant l'une des revendications 1 à 4, l'installation de réception comportant en outre un dispositif (15) de contrôle, qui est agencé pour contrôler si le dispositif (14) de mise en mémoire tampon a au moins un élément.

6. Installation suivant l'une des revendications 1 à 5, dans laquelle la base (10) de données répartie est constituée avec ou sans une autorité répartie.

7. Installation suivant l'une des revendications 1 à 6, dans laquelle la base (10) de données répartie est une base (16) de données sur la base d'une block-chain, qui comprend de préférence une block-chain publique.

8. Installation comprenant
l'installation (11) de réception suivant l'une des revendications 1 à 7 et un système (2) d'enregistrement d'itinéraires du trafic ferroviaire,
comportant en outre une installation (1) de distribution pour la multiplication de données du système (2) d'enregistrement d'itinéraires du trafic (3) ferroviaire, dans laquelle l'installation (1) de distribution comporte :
un dispositif (4) de lecture agencé pour lire des paquets (5) de données enregistrés par le système (2) d'enregistrement d'itinéraires,
un dispositif (6) d'établissement de signature, agencé pour établir une signature (7) caractérisant chaque paquet (5) de données enregistrées, et
un dispositif (8) d'envoi agencé pour envoyer le paquet (5) de données enregistré et la signature (7) établie à plusieurs noeuds (9) de réseau de la base (10) de données répartie.

9. Procédé (200) de sécurisation de données d'un système (2) d'enregistrement d'itinéraires dans le trafic (3) ferroviaire en utilisant une base (10) de données répartie, comportant les stades suivants :
réception (210) d'un paquet (5) de données enregistré et d'une signature (7) du paquet (5) de données enregistré, dans lequel la signature constitue une empreinte digitale unique en son genre du paquet de données,
contrôle (220) d'une mise du paquet (5) de données enregistré dans la base (10) de données répartie, et
mise (230) en mémoire tampon de la signature (7) en fonction du contrôle de la mise du paquet (5) de données enregistré dans la base (10) de données répartie, dans lequel on met fin à la mise en mémoire tampon de la signature lorsque le paquet de données reçu est mis dans la base de données répartie.

10. Procédé (200) suivant la revendication 9, que l'on effectue avec une installation suivant l'une des revendications 1 à 6.

11. Procédé (100) suivant la revendication 9 ou 10, comportant les stades suivants :
lecture (110) de paquets (5) de données enregistrés par le système (2) d'enregistrement d'itinéraires,
Établissement (120) d'une signature (7), caractérisant chaque paquet (5) de données, et
Envoi (130) des paquets (5) de données enregistrés et des signatures (7) établies à plusieurs noeuds (9) de réseau de la base (10) de données répartie.
